# EUROPEAN PATENT SPECIFICATION

(11) **EP 4 207 050 B1**
(45) Date of publication and mention of the grant of the patent: **25.11.2026**
(21) Application number: 22214843.9
(22) Date of filing: 20.12.2022
(51) Int. Cl.: G06T 3/12

(54) **IMAGE PROCESSING APPARATUS, IMAGE PROCESSING METHOD, PROGRAM, AND STORAGE MEDIUM**
BILDVERARBEITUNGSVORRICHTUNG, BILDVERARBEITUNGSVERFAHREN, PROGRAMM UND SPEICHERMEDIUM
APPAREIL DE TRAITEMENT D'IMAGE, PROCÉDÉ DE TRAITEMENT D'IMAGE, PROGRAMME ET SUPPORT DE STOCKAGE

(30) Priority: 28.12.2021 JP 2021214448
(43) Date of publication of application: 05.07.2023
(73) Proprietor: CANON KABUSHIKI KAISHA, Tokyo 146-8501 (JP)
(72) Inventor: KOBAYASHI, Masaaki, Tokyo (JP)
(74) Representative: WESER & Kollegen Patentanwälte PartmbB

(56) References cited:
- KISHISHITA NAOHIRO ET AL: "Poster: Investigation on the peripheral visual field for information display with real and virtual wide field-of-view see-through HMDs", 2013 IEEE SYMPOSIUM ON 3D USER INTERFACES (3DUI), IEEE, 16 March 2013 (2013-03-16), pages 143 - 144, XP032479312, ISBN: 978-1-4673-6097-5, [retrieved on 20130628], DOI: 10.1109/3DUI.2013.6550219
- CAROLINA CRUZ-NEIRA ET AL: "Surround-screen projection-based virtual reality", SIGGRAPH 93: 20TH ANNUAL CONFERENCE ON COMPUTER GRAPHICS AND INTERACTIVE TECHNIQUES; AUGUST 1-6, 1993; ANAHEIM, CALIFORNIA, USA; [COMPUTER GRAPHICS : PROCEEDINGS ; A PUBLICATION OF ACM SIGGRAPH[COMPUTER GRAPHICS / ANNUAL CONFERENCE SERIES] . - NEW YO, 1 September 1993 (1993-09-01), pages 135 - 142, XP058113838, ISBN: 978-0-89791-601-1, DOI: 10.1145/166117.166134

## Description

### BACKGROUND OF THE INVENTION

### Field of the Invention

The present disclosure relates to an image processing technique to convert a wide-angle image into a perspective projection image.

### Description of the Related Art

Recent years, a head-mounted display (HMD) type XR information processing terminal has started to become popular. XR is a term that collectively calls virtual reality (VR), augmented reality (AR), and mixed reality (MR). Among HMDs, there are HMDs of various viewing angle specifications depending on the cost and application. Additionally, in general, an ultrawide-angle image such as a fisheye image (also called an omnidirectional image and the like) having an angle of view of 180 degrees or more that is obtained by imaging using a fisheye lens with a wide angle of view is often used as image contents for the HMD. An image actually displayed on the HMD is a limited image region corresponding to a viewing angle of the HMD out of the wide-angle image. To this end, it is necessary to cut out an image region corresponding to the viewing angle determined for each model of the HMD from the wide-angle image and convert the image region into a perspective projection image developed in a plane (see Makoto Shohara, et al., Special Feature A New Visual Audio Experience Chapter 2: Omnidirectional Imaging (The journal of the Institute of Image Information and Television Engineers Vol. 69, No. 7, 2015) 652-657). In this case, the perspective projection image developed in a plane is an image that is obtained by using a normal lens and is proper to be viewed by a human and be displayed on a plane display.

During editing of the image contents for the HMD, it is necessary to figure out whether a necessary object is fit within the image to be displayed on the HMD. However, the image region cut out for the HMD has a narrow angle of view and it is difficult to capture the object, and the wide-angle image is improper to be viewed by a human on a normal plane display. Thus, there is a problem that it is difficult to confirm the perspective projection image generated from a partial image region corresponding to a predetermined angle of view of the wide-angle image.

### SUMMARY OF THE INVENTION

The technique of the present disclosure in its first aspect provides an image processing apparatus as specified in claims 1 to 11.

The technique of the present disclosure in its second aspect provides an image processing method as specified in claim 12.

The technique of the present disclosure in its third aspect provides a program as specified in claim 13.

The technique of the present disclosure in its third aspect provides a non-transitory computer-readable storage medium as specified in claim 14.

Further features of the present invention will become apparent from the following description of exemplary embodiments with reference to the attached drawings.

### BRIEF DESCRIPTION OF THE DRAWINGS

Fig. 1 is a diagram describing a hardware configuration example of an image processing apparatus according to an embodiment;
Fig. 2 is a flowchart of generating a perspective projection image in an embodiment 1;
Fig. 3A is a diagram describing a UI screen example in the embodiment 1;
Fig. 3B is a diagram describing a UI screen example in the embodiment 1;
Fig. 3C is a diagram describing a UI screen example in the embodiment 1;
Fig. 4 is a flowchart of generating a UI screen in an embodiment 2;
Fig. 5 is a diagram describing a UI screen example in the embodiment 2;
Fig. 6 is a flowchart of generating a perspective projection image in an embodiment 3;
Fig. 7 is a diagram describing a UI screen example in the embodiment 3;
Fig. 8 is a flowchart of generating a perspective projection image in an embodiment 4;
Fig. 9A is a diagram describing a UI screen example in the embodiment 4;
Fig. 9B is a diagram describing a UI screen example in the embodiment 4;
Fig. 9C is a diagram describing a UI screen example in the embodiment 4;
Fig. 10 is a flowchart of generating a perspective projection image in an embodiment 5;
Fig. 11 is a flowchart of generating a perspective projection image in an embodiment 6;
Fig. 12 is a flowchart of generating a perspective projection image in an embodiment 7;
Fig. 13A is a diagram describing a screen example expressing the center of a viewpoint;
Fig. 13B is a diagram describing a screen example expressing the center of the viewpoint;
Fig. 13C is a diagram describing a screen example expressing the center of the viewpoint; and
Fig. 14 is a diagram describing a software configuration example of the image processing apparatus according to the embodiment.

### DESCRIPTION OF THE EMBODIMENTS

### [Embodiment 1]

Here is described an image processing apparatus that can convert an ultrawide-angle image into a planar development image while highlighting an image region corresponding to a predetermined angle of view in the ultrawide-angle image on a perspective projection image. Note that, for the sake of explanatory convenience, a wide-angle image with a wider angle may be called the ultrawide-angle image in some cases. A projection method used to generate a fisheye image, which is the ultrawide-angle image, includes stereographic projection, equidistant projection, equisolid angle projection, and the like. On the other hand, the projection method used to generate the planar development image is a central projection method. An image generated by the central projection method is called the perspective projection image. Thus, projection conversion is necessary to obtain the perspective projection image as the planar development image from the fisheye image.

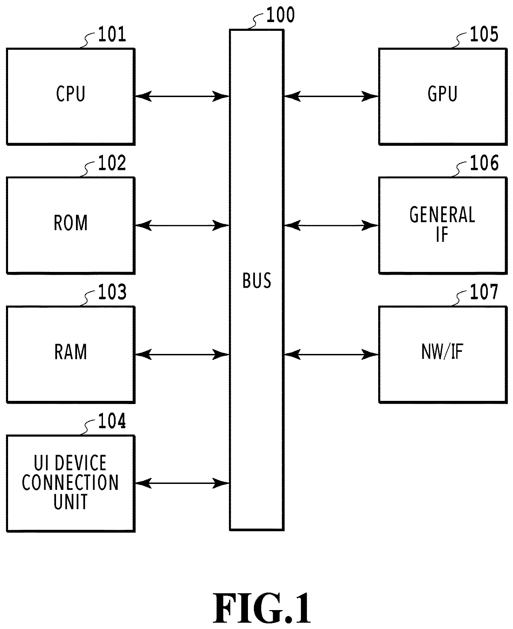

Fig. 1 illustrates a diagram describing a hardware configuration example of an image processing apparatus according to the present embodiment.

A bus 100 allows for mutual data communication between constituents included in the image processing apparatus. A CPU 101 executes software including a program for performing image processing and controls the overall image processing apparatus. A ROM 102 records the program executed by the CPU 101 and various data. A RAM 103 loads the program and the data stored in the ROM 102 in the activation of the present image processing apparatus to function as a working area of the CPU 101 and stores an obtained image and a generated image. A user interface (UI) device connection unit 104 can accept input of a keyboard, a mouse, and orientation information on an HMD. A GPU 105 can perform image processing and output image data to a display device such as the HMD and a standard plane display. A general interface (IF) 106 allows for connection with a capture device and input of a camera image. A network (NW)/IF 107 can be connected to a network with or without wire and can input and output data to and from an external device through the network. In the present embodiment, descriptions are given assuming that an image is obtained from the ROM 102 and the UI device connection unit 104; however, an image may be inputted in real time from the capture device through the general IF 106, or an image may be obtained by way of the network through the NW/IF 107. Additionally, an image generated by the image processing apparatus of the present embodiment can be incorporated as a part of a UI function, as needed, to be displayed on a display or outputted to a file.

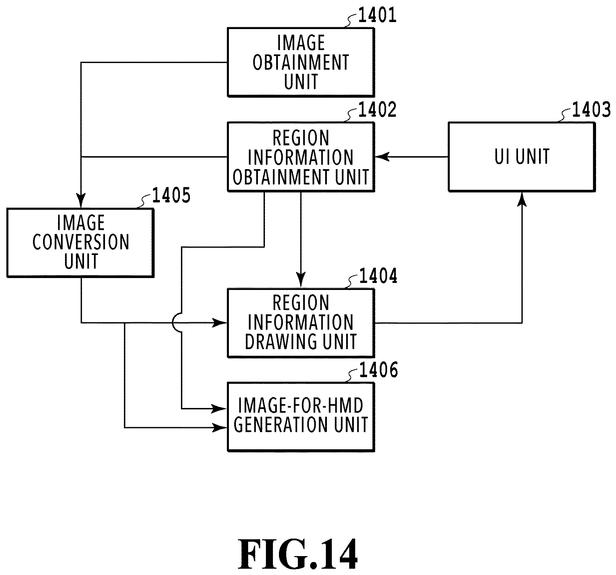

Fig. 14 illustrates a diagram describing a software configuration example of the image processing apparatus according to the present embodiment. An image obtainment unit 1401 obtains an ultrawide-angle image including angle of view information from the ROM 102 and the NW/IF 107. A region information obtainment unit 1402 obtains a size of a perspective projection image, a parameter related to an optical axis direction and an angle of view of a virtual camera, and information related to a visual field region that is superimposed and drawn on the perspective projection image from the ROM 102, the NW/IF 107, and a UI unit 1403 described later. The UI unit 1403 generates a UI screen, outputs the UI screen including an image outputted by a region information drawing unit 1404 described later to an image device, and obtains user input that is inputted through the UI screen. An image conversion unit 1405 generates the perspective projection image by projection conversion of the ultrawide-angle image based on the size of the perspective projection image and the optical axis direction and the angle of view of the virtual camera obtained by the region information obtainment unit 1402. The region information drawing unit 1404 superimposes and draws the information indicating the visual field region obtained by the region information obtainment unit 1402 on the perspective projection image and outputs the information to the UI unit 1403. An image-for-HMD generation unit 1406 cuts out an image region corresponding to the visual field region obtained by the region information obtainment unit 1402 from the perspective projection image, generates an image for the HMD, and outputs the image to the HMD.

In a coordinate system of an image treated in the present embodiment, a width and a height of the image are wₕ and hₕ, respectively, an X coordinate at the left end of the image is -wₕ/2, an X coordinate at the right end of the image is wₕ/2, a Y coordinate at the top end of the image is -hₕ/2, and a Y coordinate at the bottom end of the image is hₕ/2, where an image center is the origin. Additionally, each pixel forming the image has RGB color channels, and a pixel value of each pixel includes a value of each RGB color channel.

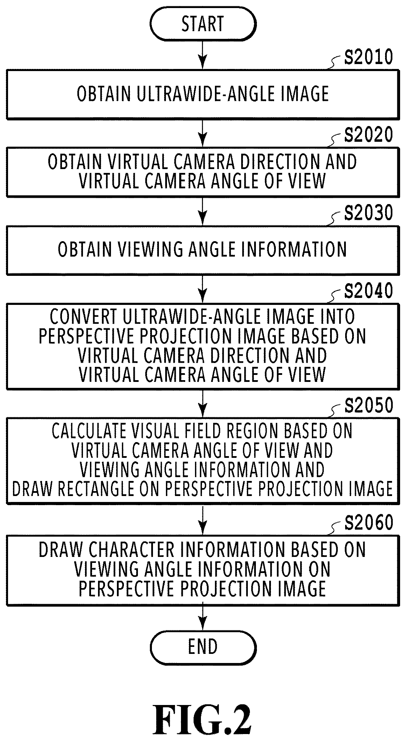

Fig. 2 illustrates a flowchart describing processing of generating the perspective projection image for each frame in the embodiment 1. In this case, the steps are executed sequentially in a direction of an arrow illustrated in Fig. 2 unless otherwise stated. However, as long as there is no dependency in an input and output relationship of data between the steps, the steps can be executed in a different order. Additionally, although the CPU 101 executes each step, a part of the processing such as drawing processing may be performed by the GPU 105. An image generated by the present procedure is displayed on a display connected through the GPU 105. If a display frame rate of the inputted image is 60 fps, reading, generation, and display of 60 images are performed per second.

In S2010, the image obtainment unit 1401 obtains the ultrawide-angle image. In the present embodiment, a fisheye image obtained by using a fisheye lens of an equidistant projection method having an angle of view of up to 180 degrees is inputted as the ultrawide-angle image. Note that, optical distortion is removed by digital image processing from the fisheye image obtained as the ultrawide-angle image in this case. In the present embodiment, descriptions are given assuming that a radius of a lens circle of the ultrawide-angle image is r' and a width and a height of the fisheye image are 2r' + 1.

In S2020, the region information obtainment unit 1402 obtains the optical axis direction and the angle of view of the virtual camera for defining an image for confirmation that is set for the ultrawide-angle image. In the present embodiment, an example of obtaining the optical axis direction and the angle of view of the virtual camera from the UI unit 1403 of an application is described. In an initial state, the optical axis direction of the virtual camera is a front direction of the obtained ultrawide-angle image, and the angle of view of the virtual camera is 120 degrees (60 degrees each to the right and left). As a method of obtaining those parameters of the virtual camera, a movement amount to the top and bottom and right and left obtained by dragging the mouse is a change amount to the top and bottom and right and left in the optical axis direction of the virtual camera, and a value obtained by adding the change amount to the above-described initial value is obtained. Additionally, a value obtained by changing the optical axis direction of the virtual camera by 10 degrees each by clicking top and bottom and right and left buttons is obtained. Moreover, the angle of view of the virtual camera can be increased and decreased by rotating a scroll wheel of the mouse. Note that, the virtual camera is a virtual camera that is capable of obtaining a virtual viewpoint image expressing a view from a designated virtual viewpoint as a captured image and is different from an actually disposed image capturing device. The virtual camera is a concept for conveniently describing the virtual viewpoint according to generation of the virtual viewpoint image. The optical axis direction and the angle of view of the viewpoint in virtual image capturing that are generated based on the fisheye image and the designated virtual viewpoint can be expressed as the optical axis direction and the angle of view of the virtual camera. Note that, a position of the virtual camera is a position of the image capturing device of the obtained ultrawide-angle image.

In S2030, the region information obtainment unit 1402 obtains predetermined viewing angle information. In the present embodiment, as viewing angle information of the HMD, 60 degrees (30 degrees each to the top and bottom and right and left) as a steady observation viewing angle is obtained from data stored in the ROM 102 and the like in advance. Note that, a viewing angle of a human has various classifications. An effective visual field in which observation is made only with eye movement and specific information can be captured immediately is within about 15 degrees each to the right and left, about 8 degrees to the top, and about 12 degrees to the bottom. A viewing angle at which it is possible to make observation effortlessly with eye movement and head movement is called a steady observation visual field and is within 30 to 45 degrees each to the right and left, 20 to 30 degrees to the top, and 25 to 40 degrees to the bottom. In contrast to the steady observation visual field, a viewing angle that allows for only a discrimination capability of determining the existence of presented information but that affects a sense of space coordinate of a human is called an induced visual field with 30 to 100 degrees each to the right and left and 20 to 85 degrees each to the top and bottom.

In S2040, based on the optical axis direction and the angle of view of the virtual camera obtained in S2020, the image conversion unit 1405 converts the fisheye image obtained as the ultrawide-angle image in S2010 into the perspective projection image as the image for confirmation. A width of the perspective projection image is w, a height is h, the optical axis direction of the virtual camera is (φₓ, φ_{y}), the angle of view of the virtual camera is 2a degrees (a degrees each to the top and bottom and right and left), a coordinate value is (x, y), and a coordinate value of the fisheye image is (x', y'). Additionally, an image height of a pixel indicated by an angle is (θₓ, θ_{y}). (θₓ, θ_{y}) is obtained based on the following equations in a case where the fisheye image and the perspective projection image have the same value. Note that, in the present embodiment, h = 1080 and w = 1920. $r = max \left(w, h\right) / 2$ (1) $y = r ⋅ \frac{tan \left({θ}_{y}-{ϕ}_{y}\right)}{tan \left(a\right)}$ (2) $x = r ⋅ \frac{tan \left({θ}_{x}-{ϕ}_{x}\right)}{tan \left(a\right)}$ (3) $y ′ = r ′ ⋅ \frac{{θ}_{y}}{180}$ (4) $x ′ = r ′ ⋅ \frac{{θ}_{x}}{180}$ (5) $y ′ = r ′ ⋅ \frac{atan \left(y⋅tan\left(a\right)/r\right) + {ϕ}_{y}}{r}$ (6) $x ′ = r ′ ⋅ \frac{atan \left(x⋅tan\left(a\right)/r\right) + {ϕ}_{x}}{r}$ (7)

Note that, r is a distance from the center of the perspective projection image to an image end, and r' is a radius of a lens circle of the fisheye image. Additionally, max(w,h) is a function that outputs a greater one out of w and h. A pixel value in each coordinate on the perspective projection image after conversion is calculated based on a pixel value in a corresponding coordinate on the fisheye image before conversion that is associated by the above-described equations (1) to (7). Note that, a coordinate in which there is a pixel value on the fisheye image is not an integer but a real number. Accordingly, if a coordinate in which there is no pixel value is calculated, a value obtained by interpolating a pixel value by the bicubic method is applied as the pixel value of the perspective projection image. Note that, a focal length is usually set for the perspective projection image, and in the present embodiment, a focal length is automatically set according to a size of the generated image.

In S2050, the region information drawing unit 1404 calculates the visual field region based on the viewing angle information on the angle of view of the virtual camera and superimposes and draws a rectangle indicating the calculated visual field region on the perspective projection image. In the present embodiment, in order to highlight the visual field region, a rectangle having sides at positions of -30 degrees to the top left and 30 degrees to the bottom right from the optical axis of the virtual camera is drawn. A Y coordinate of the top side, a Y coordinate of the bottom side, an X coordinate of the left side, and an X coordinate of the right side of the rectangle are each calculated by the equations (4) and (5). Note that, in a case where a part of the rectangle indicating the visual field region is not fit within the perspective projection image, the rectangle is deformed and drawn to be fit within the perspective projection image.

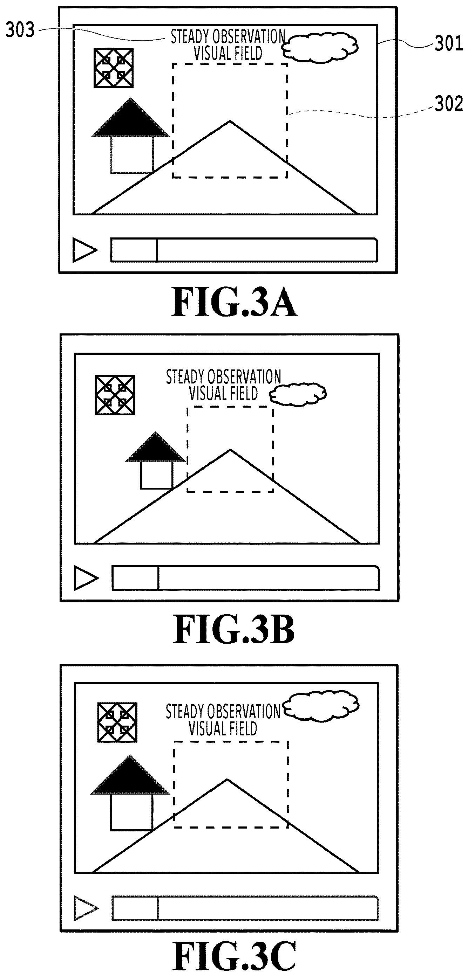

Figs. 3A to 3C illustrate examples of the rectangle indicating the visual field region on the UI screen in the present embodiment. In Figs. 3A to 3C, a perspective projection image 301 that is the image for confirmation is displayed on the UI screen, and a rectangle 302 indicating the visual field region is drawn with a broken line in the center of the perspective projection image 301. Note that, the line drawing the rectangle 302 indicating the visual field region is not limited to a broken line and may be any line as long as it is an easily visible line such as a green continuous line. A size of the rectangle 302 indicating the visual field region is changed with respect to the perspective projection image 301 in accordance with an angle of view of a second virtual camera; however, in the present embodiment, the rectangle 302 is always drawn in a constant size in the center of the perspective projection image 301. Fig. 3A illustrates a state in which the angle of view of the virtual camera is narrow, and Fig. 3B illustrates a state in which the angle of view of the virtual camera is wide. As described above, the angle of view of the virtual camera can be changed in accordance with the angle of view of the virtual camera that is inputted by the user through the UI unit 1403.

In S2060, the region information drawing unit 1404 draws character information 303 based on the viewing angle information on the perspective projection image 301 as the image for confirmation. In the present embodiment, a character string of "steady observation viewing angle" is drawn at the top left of the rectangle indicating the visual field region using the same color as that of the rectangle. Note that, in a case where the viewing angle set based on the obtained viewing angle information is not the steady observation viewing angle, a character string in accordance with the viewing angle information such as "induced visual field" is drawn, for example.

A viewer never performs editing work such as cutting out a part of the perspective projection image. For this reason, in a case where the viewer views the perspective projection image cut out at the steady observation viewing angle or the like on the HMD, since the angle of view is narrower than the viewing angle of a human, the viewer can view the image without awareness of the effective visual field.

On the other hand, a person who performs imaging needs to capture an image while considering the angle of view and composition, and an editor needs to shape an image by trimming partially. Thus, in a case of confirming the cut out perspective projection image on a plane display, it is difficult to figure out whether the object is fit within what degrees of angle of view. Particularly, in a case where there is a so-called zoom function to change the angle of view of the virtual camera, it is necessary to be aware of a relationship between the size of the object and the viewing angle while figuring out the current angle of view (zoom magnification), and it has been difficult to concentrate on imaging.

Thus, in the present embodiment, with the rectangle as a guide based on the predetermined viewing angle being displayed on the perspective projection image for editing and imaging, it is possible to easily fit the object within an assumed viewing angle and to perform intuitive imaging. For example, in a case of confirming the image immediately after imaging, whether the object is fit within the viewing angle can be determined based on the rectangle indicating the visual field region based on the viewing angle. Thus, if it is determined that the object is not fit within the viewing angle, it is possible to perform imaging again immediately. Conversely, it is also usable to display the object to be greater than the rectangle as the guide so as to be more powerful.

In the present embodiment, the steady observation viewing angle is obtained as the viewing angle information; however, it is not limited thereto. For example, an arbitrary viewing angle such as the viewing angle of the typical HMD and the effective visual field may be obtained as the viewing angle information, and the viewing angle may be displayed as a numerical value with a rectangle corresponding to the viewing angle. Additionally, although the drawn character string is "steady observation visual field", it is not limited thereto, and any expression such as "steady observation viewing angle (60 degrees)" or simply "60 degrees" may be applied as long as it is character information on the highlighted region. Moreover, a value converted into a full-size focal length (mm) may be displayed. Furthermore, the character information may be omitted. That is, S2060 is skippable.

In the present embodiment, the rectangle indicating the visual field region is drawn assuming that the angles of view to the top and bottom and right and left are the same with respect to the line-of-sight direction of an HMD wearer; however, a drawing method of the rectangle is not limited thereto. For example, as illustrated in Fig. 3C, as the steady observation visual field, the rectangle may be drawn at the position of -30 degrees to the left, 30 degrees to the right, 20 degrees to the top, and -25 degrees to the bottom from the center.

In the present embodiment, descriptions are given assuming that the fisheye image of the equidistant projection having the angle of view of 180 degrees is inputted as the ultrawide-angle image; however, the inputted ultrawide-angle image is not limited thereto. The fisheye image used as the ultrawide-angle image may be 180 degrees or less or may be greater than 180 degrees, and may be an image recorded by a projection method other than the equidistant projection. Additionally, an equidistant cylindrical image obtained by equidistant cylindrical conversion of the ultrawide-angle image may be inputted, or an omnidirectional image may be inputted. The ultrawide-angle image in the present embodiment indicates an ultrawide-angle image that allows the HMD, which is capable of head following display, to sufficiently secure the viewing angle. For example, an angle of view of a normal lens is expressed by a focal length, and if it is a wide-angle, the focal length is about 8 mm (a total of the right and left angles of view is 130 degrees with a full-size sensor). This is an angle of view that is too narrow for display on the HMD that follows head movement. Note that, if the narrow angle of view is allowable, the present technique is applicable; however, since the perspective projection image is generated by cutting out in an arbitrary angle direction, it is favorable to input a fisheye image or an omnidirectional image that can secure sufficient image quality (density of pixels) even in a wide-angle region. Additionally, even with an image of a narrow angle of view, it is possible to obtain sufficient angle of view and image quality also in a case of generating an image of an ultrawide-angle region in a pseudo manner by synthesizing and interpolating multiple images of different directions.

The present embodiment is described to be executed on the image processing apparatus having a configuration equivalent to that of a PC; however, it is not limited thereto, and a configuration that the present embodiment is executed by an image processing unit on an image capturing device and the perspective projection image is displayed on a viewfinder and a rear display of the image capturing device.

In the present embodiment, a moving image is described as an example of the inputted ultrawide-angle image; however, the inputted ultrawide-angle image may be a still image. Additionally, although the inputted ultrawide-angle image is described as a captured image obtained by image capturing by the image capturing device, CG may be applied as long as information on the angle of view is included.

### [Embodiment 2]

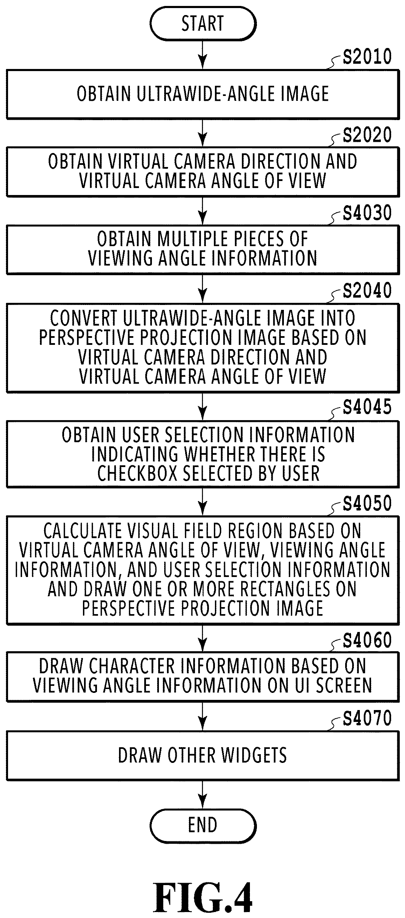

In the embodiment 1, the perspective projection image on which the rectangle indicating the visual field region based on the viewing angle is drawn is generated from the ultrawide-angle image; however, in the present embodiment, an image on which a widget for UI is drawn is generated. Fig. 4 is a flowchart of generating a UI screen in the embodiment 2. Unless otherwise stated or changed, the descriptions are pursuant to the descriptions of Fig. 2 in the embodiment 1. The UI screen generated in the present embodiment includes a display region 501 that displays the perspective projection image and widgets such as a checkbox 502, a slider 503 that controls a play position of the perspective projection image, and a play button 504. Note that, since operations of the widgets are general, descriptions of a widget that is not related to the present technique are omitted. Note that, a default state of the later-described checkbox 502 is a state in which all the checkboxes 502 are unchecked.

In S4030, the region information obtainment unit 1402 obtains multiple pieces of the viewing angle information. In the present embodiment, the region information obtainment unit 1402 obtains information including 60 degrees (observation viewing angle), 100 degrees (product A), 110 degrees (product B), 120 degrees (product C) and information whether the checkboxes corresponding to the respective items are checked.

In S4045, the UI unit 1403 obtains user selection information indicating whether there is a checkbox selected by the user.

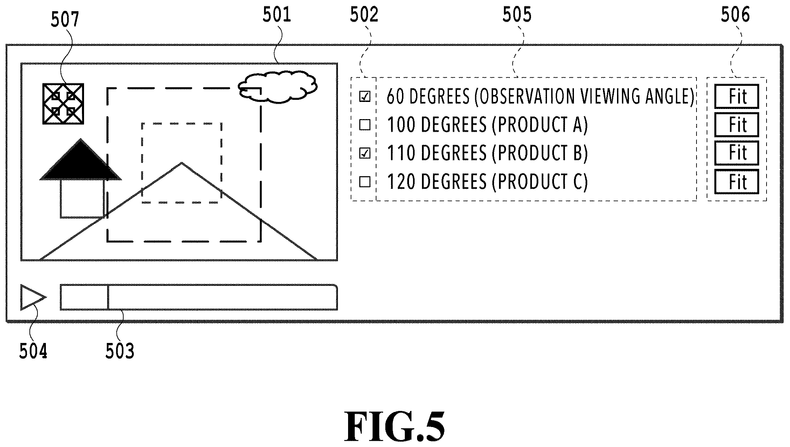

In S4050, the region information drawing unit 1404 calculates the visual field region based on the angle of view of the virtual camera, the viewing angle information, and the user selection information and draws one or more rectangles indicating the calculated visual field region on the perspective projection image. In the present embodiment, the region information drawing unit 1404 draws a rectangle corresponding to the viewing angle with a checked corresponding checkbox out of the obtained viewing angle information. As the drawing example, Fig. 5 illustrates a UI screen of a moving image player.

In S4060, the UI unit 1403 draws character information 505 based on the viewing angle information on the UI screen. In the present embodiment, as illustrated in Fig. 5, the character information based on the viewing angle information is not superimposed on the perspective projection image and drawn as a widget outside a display region in which the perspective projection image is displayed. In this process, the checkbox indicating whether the rectangle is drawn is checked or not checked, accordingly. Note that, a state indicating whether the checkbox is selected is kept after the present procedure ends and is able to be obtained in a case of executing the present procedure again.

In S4070, the UI unit 1403 draws the other widgets. In the present embodiment, the UI unit 1403 draws the play button 504, the slider 503 that indicates a play state of the moving image, an angle of view control button 507 that designates the angle of view of the virtual camera, and a Fit button 506 that sets the angle of view of the virtual camera so as to be fit in a window.

In the present embodiment, with the user selecting the viewing angle to be highlighted by drawing the rectangle by using the checkbox, it is possible to set the target angle and the viewing angle of the HMD and to highlight the viewing angle thereof. Additionally, with the rectangles corresponding to multiple pieces of the viewing angle information being drawn concurrently, for example, the user can confirm the observation region, the angle of view of the HMD, and the like while comparing on the perspective projection image on which the visual field regions of the multiple viewing angles are displayed as preview.

In the present embodiment, although four types of the viewing angle information are obtained in S4030, the number and the contents are not limited thereto. Additionally, a configuration in which the viewing angle information and user input are obtained through the network to update the display contents may be applied.

### [Embodiment 3]

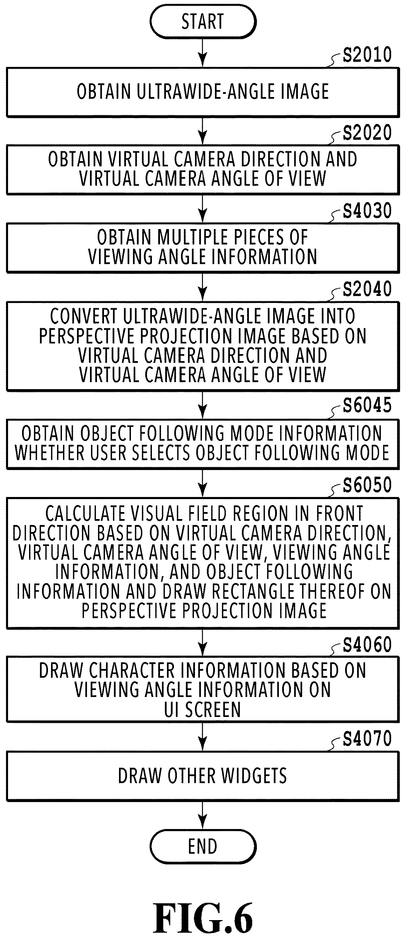

In the embodiments 1 and 2, the rectangle indicating the visual field region is drawn while being fixed with respect to the perspective projection image. In the present embodiment, the rectangle indicating the visual field region is drawn while moving with respect to the perspective projection image so as to follow a specific object in the fisheye image as the inputted ultrawide-angle image. Fig. 6 is a flowchart of generating a perspective projection image in an embodiment 3. Unless otherwise stated or changed, the descriptions are pursuant to the descriptions of Fig. 2 in the embodiment 1. Note that, the object to follow may be selected by the user each time, or a predetermined object that is determined in advance may be detected.

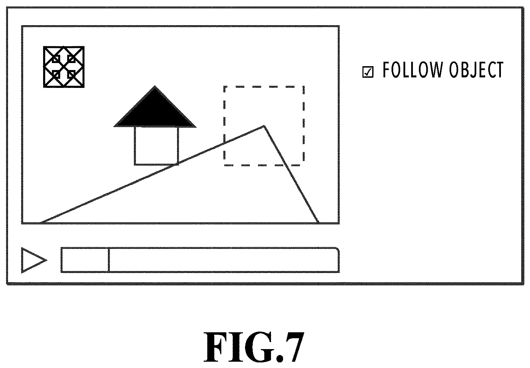

In S6045, the region information obtainment unit 1402 obtains object following mode information whether the user selects an object following mode. In the present embodiment, as illustrated in Fig. 7, the region information obtainment unit 1402 obtains information whether the checkbox in the UI screen is checked. Fig. 7 is a diagram describing a UI screen example in the embodiment 3.

In S6050, the region information drawing unit 1404 determines the coordinate value of the visual field region based on the optical axis direction and the angle of view of the virtual camera, the viewing angle information, and the object following information and draws the rectangle indicating the calculated visual field region on the perspective projection image. Fig. 7 illustrates a UI screen example in this case. Fig. 7 illustrates a screen example of a case where the optical axis direction (front direction) of the virtual camera is shifted to the right while the object following mode is selected as the object following information, and accordingly the rectangle indicating the visual field region is also drawn to be shifted to the right. In a case where the object following mode is selected, first, in order to obtain the coordinate value of the visual field region, the four coordinate values at the top left, top right, bottom left, and bottom right of the rectangle indicating the visual field region are calculated based on the coordinate value of the position of the object included in the object following information and the equations (2) and (3). Then, the top, bottom, left, and right sides of the rectangle are drawn based on the calculated coordinate values. As a calculation method in a case where the object following mode information is not selected, the optical axis direction of the virtual camera is ignored, and thus calculation is similarly performed where (φx, φy) = (0, 0). An example of the perspective projection image in a case where the object following mode information is not selected, the above-described coordinate value obtainment is not performed, and the rectangle is drawn in the center of the screen is the same as that illustrated in Figs. 3A to 3C.

In the present embodiment, with the four points of the rectangle indicating the visual field region being corrected, the rectangle is not fixed in the center of the perspective projection image and is displayed in the optical axis direction of the virtual viewpoint camera as illustrated in Fig. 7. With this, with the rectangle indicating the visual field region being drawn in the optical axis direction of the virtual camera, it is possible to provide an image that allows for easy recognition of the front viewing angle while manipulating the optical axis direction of the virtual camera with the mouse and confirming an object outside the viewing angle.

### [Embodiment 4]

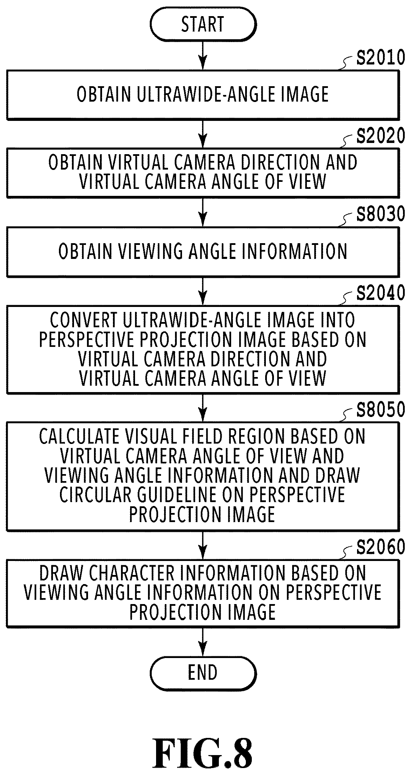

The embodiments 1 to 3 describe an example of highlighting using the rectangle; however, in the present embodiment, a method of drawing a circular guideline by a highlighting method is described with reference to Fig. 8. Fig. 8 is a flowchart of generating a perspective image in an embodiment 4. Unless otherwise stated or changed, the descriptions are pursuant to the descriptions of Fig. 2 in the embodiment 1.

In S8030, the region information obtainment unit 1402 obtains the viewing angle information. In the present embodiment, the region information obtainment unit 1402 obtains information that a radius of the steady observation viewing angle is 30 degrees.

In S8050, the region information drawing unit 1404 calculates the visual field region based on the optical axis direction and the angle of view of the virtual camera and the viewing angle information and draws the circular guideline on the perspective projection image. In the present embodiment, based on the viewing angle information obtained in S8030, which is 30 degrees, a radius of the circle is obtained based on the following equation where θ = 30, and the circle is drawn with the radius from the center of the perspective projection image. $radius = r ⋅ \frac{tan \left(θ\right)}{tan \left(a\right)}$ (8)

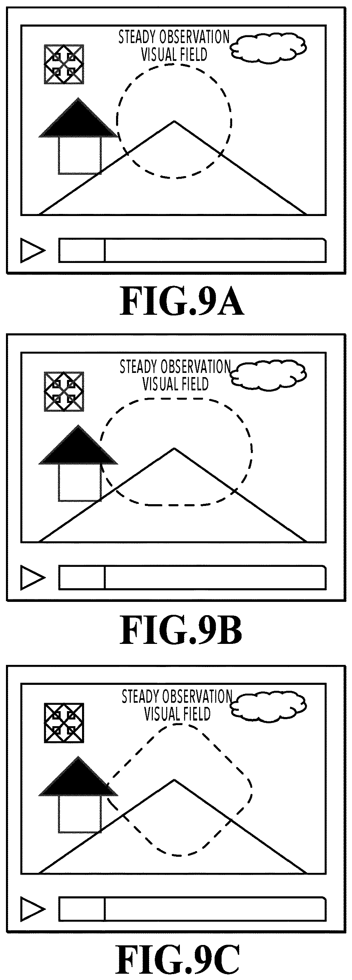

Figs. 9A to 9C illustrate an example of a UI screen in this case. Figs. 9A to 9C are diagrams describing a UI screen example in the embodiment 4. Fig. 9A is a UI screen example in which the circle described in S8050 is drawn. The viewing angle of the HMD and the viewing angle of a human are closer to a circle more than a rectangle. Accordingly, it is possible to highlight a region closer to the actual view. In the present embodiment, a perfect circle is drawn; however, the circle is not necessarily a perfect circle and may be an ellipse, a rectangle with circular corners, a rhombus with circular corners, or a combined shape of a circle and a rectangle. For example, Figs. 9B and 9C may be applied. Note that, in a case of seeking to replicate the visual field based on the visual feature of a human more faithfully, the region is a distorted shape compared with the shape of a rectangle or a circle. On the other hand, the distorted shape has a deteriorated design. Taking into consideration that the highlighted visual field region is only a guide, it is not about which one is right but is a problem of adjustment in a balance between faithfulness and design, and it may be determined depending on the target user.

### [Embodiment 5]

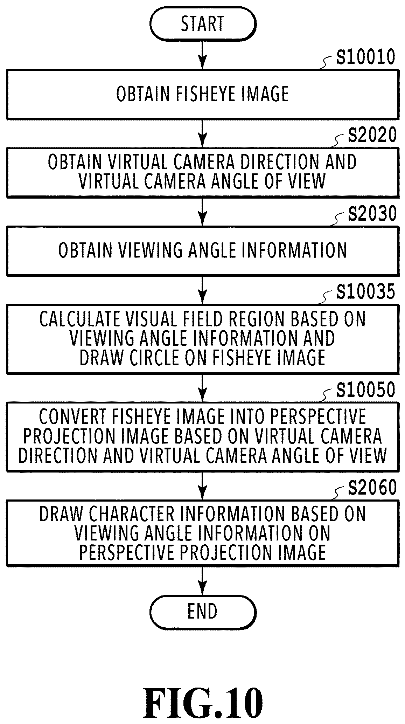

In the present embodiment, an example of highlighting the visual field region by drawing the circle in the fisheye image is described with reference to Fig. 10. Fig. 10 is a flowchart of generating a perspective projection image in an embodiment 5. Unless otherwise stated or changed, the descriptions are pursuant to the descriptions of Fig. 2 in the embodiment 1.

In S10010, the image obtainment unit 1401 obtains the fisheye image. The operation is equivalent to that in S2010 except that the obtained image is changed.

In S10035, the region information drawing unit 1404 calculates the visual field region based on the angle of view and the viewing angle information of the virtual camera and draws the circle indicating the visual field region on the fisheye image. The ultrawide-angle image in the present embodiment is the fisheye image, and the circle corresponding to the viewing angle based on the viewing angle information is drawn on a concentric circle about the optical axis. The circle drawn on the concentric circle of the fisheye maintains the shape of the circle still after conversion into the perspective projection image. $radius = r ⋅ \frac{θ}{180}$ (9)

In S10050, the image conversion unit 1405 converts the fisheye image into the perspective projection image based on the optical axis direction and the angle of view of the virtual camera. The operation is the same as that in S2050. However, the circle drawn on the fisheye image is also converted.

In the present embodiment, the circle is drawn on the fisheye image instead of the perspective projection image. Thus, even if the guideline is drawn on the fisheye image instead of the perspective projection image, it is possible to obtain similar effects as that of the other embodiments.

In the present embodiment, since the ultrawide-angle image (fisheye image) on which the guideline is drawn is converted into the perspective projection image based on the optical axis direction and the angle of view of the virtual camera, the guideline is drawn in the optical axis direction of the virtual camera. That is, the guideline is drawn based on the mode of following the object that is described in the embodiment 3.

### [Embodiment 6]

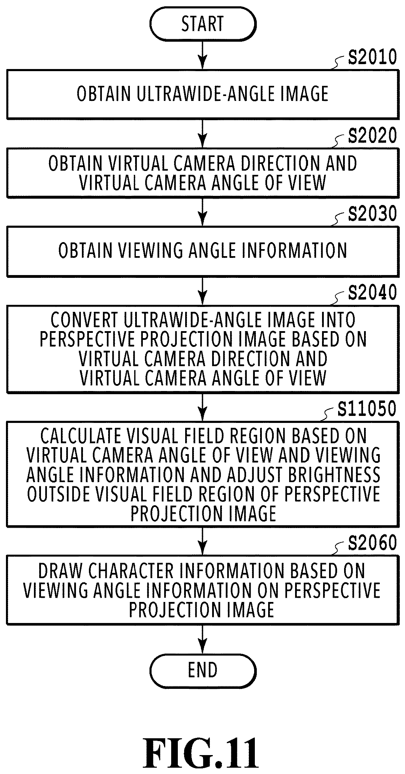

In the present embodiment, an example of highlighting the inside of the visual field region relatively by suppressing an image region outside the visual field region is described with reference to Fig. 11. Fig. 11 is a flowchart of generating a perspective projection image in an embodiment 6. Suppressing the image in the present embodiment is to darken an image and reduce contrast by adjusting gain and de-emphasize a specific image region. Note that, unless otherwise stated or changed, the descriptions are pursuant to the descriptions of Fig. 2 in the embodiment 1.

In S11050, the region information drawing unit 1404 calculates the visual field region based on the angle of view of the virtual camera and the viewing angle information and reduces brightness outside the visual field region of the perspective projection image.

According to the present embodiment, it is possible to highlight the visual field region not only by drawing the rectangle like the embodiment 1 but also by processing the image.

In the present embodiment, an example where gain is adjusted as suppression of the image region is described; however, it is not limited thereto. For example, a method of completely blacking the outside of the visual field region may be applied. Additionally, it is also possible to suppress an image by applying a low-pass filter to the outside of the viewing angle. In this process, instead of turning on and off a low-pass filter between the inside and the outside of the visual field region, a stronger low-pass filter may be applied to the outer side of the visual field region.

In the present embodiment, a boundary between the inside and the outside of the visual field region has a rectangular shape; however, it is not limited thereto, and the boundary may be circular as described in the embodiment 4.

### [Embodiment 7]

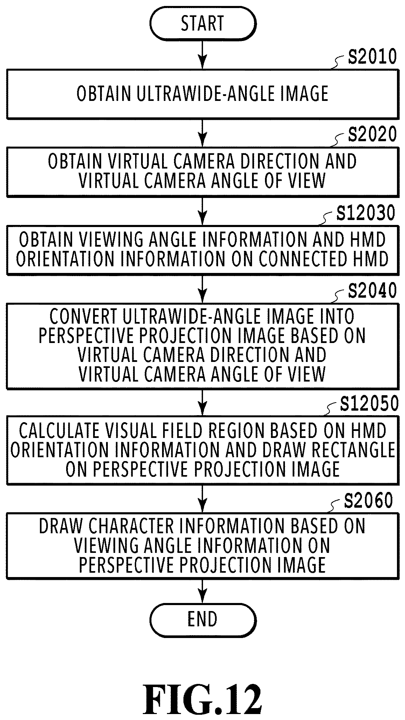

In the present embodiment, the visual field region is displayed along with head movement of the HMD. Fig. 12 is a flowchart of generating the perspective projection image in an embodiment 7. Note that, unless otherwise stated or changed, the descriptions are pursuant to the descriptions of Fig. 2 in the embodiment 1.

In the present embodiment, the generated perspective projection image is outputted as a video to both the plane display and HMD, and the region to be displayed on the HMD is highlighted on the plane display. An image corresponding to the visual field region in the optical axis direction following head movement is displayed on the HMD, and an image in which the visual field direction is fixed is displayed on the plane display as long as there is no input from the user viewing the plane display.

In S12030, the region information obtainment unit 1402 obtains the viewing angle information and HMD orientation information on the connected HMD. In this process, based on the model name of the connected HMD, the region information obtainment unit 1402 obtains the viewing angle of the model. Note that, the viewing angle may be obtained directly without referring to the model name. For the HMD orientation information, as long as the front direction of the HMD is obtained as described later, any format may be applied with no limitation.

In S12050, the region information drawing unit 1404 calculates the visual field region based on the HMD orientation information and superimposes and draws the rectangle indicating the calculated visual field region on the perspective projection image. The HMD front direction (φ'x, φ'y) is calculated based on the HMD orientation information. In this process, using the equations (2) and (3), the four coordinates at the top left, top right, bottom left, and bottom right of the rectangle of the visual field region are calculated where (φx, φy) = (φ'x, φ'y), and the top, bottom, left, and right sides of the rectangle are drawn as lines. With this, the position of the drawn rectangle is changed in accordance with head movement of the HMD.

Conventionally, in a case of concurrent output to the HMD and the plane display, usually, the image in the HMD following head movement is displayed on the plane display. The image following head movement is natural for the HMD wearer; however, for the user viewing by the normal plane display, there is a problem that the image is blurred greatly and causes sick easily. In the present embodiment, with the perspective projection image on which the rectangle indicating the visual field region of the HMD is superimposed and drawn being displayed on the display from the UI unit 1403, it is possible to display a fixed image that does not cause sick as the image while confirming the line-of-sight direction of the HMD wearer.

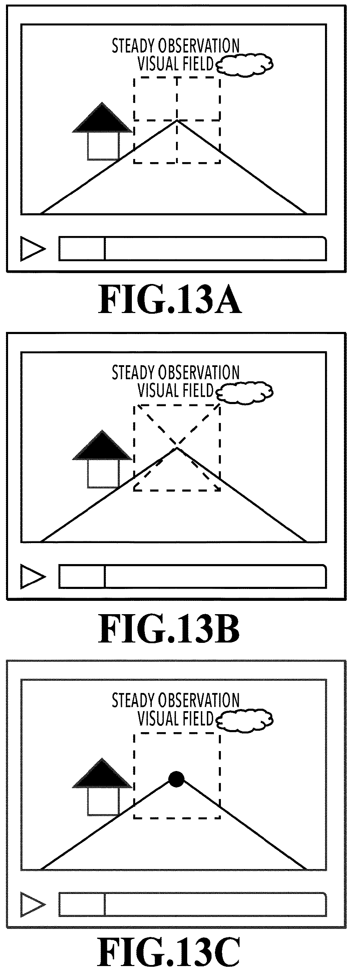

Note that, on the displayed rectangle, a cross, ×, or a point with an intersection as the center of the rectangle may be drawn as illustrated in Figs. 13A to 13C. Figs. 13A to 13C are diagrams describing screen examples expressing the center of the viewpoint, and this can express the viewpoint direction. Note that, if there is no need to express the viewing angle, the rectangle is not necessarily drawn, and only a cross, ×, or the point indicating the viewpoint direction may be drawn.

### [Other Embodiments]

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

According to the technique of the present disclosure, a perspective projection image generated from a partial image region corresponding to a predetermined angle of view of a wide-angle image is confirmed easily.

## Claims

1. An image processing apparatus configured to generate a perspective projection image from a wide-angle image, **characterized in that** the image processing apparatus comprises:
a first generation unit (1405) configured to generate the perspective projection image from the wide-angle image based on an optical axis direction and an angle of view of a virtual camera;
a region information obtainment unit (1402) configured to obtain information about a predetermined viewing angle of an HMD; and
an output unit configured to output the generated perspective projection image, in which
the perspective projection image includes region information indicating an image region corresponding to a visual field region calculated based on the predetermined viewing angle in the wide-angle image and the angle of view of the virtual camera.

2. The image processing apparatus according to claim 1, **characterized in that** the region information includes a frame indicating the image region.

3. The image processing apparatus according to claim 1 or 2, **characterized in that** the region information includes a character string indicating the viewing angle.

4. The image processing apparatus according to any one of claims 1 to 3, **characterized in that** the viewing angle is a viewing angle of a predetermined HMD, and
the region information includes a character string indicating a model of the predetermined HMD.

5. The image processing apparatus according to any one of claims 1 to 4, **characterized in that** the image processing apparatus further comprises:
a parameter obtainment unit configured to obtain an angle of view of the wide-angle image and a coordinate in the wide-angle image corresponding to a criterial coordinate in the perspective projection image, in which
the first generation unit generates the perspective projection image from the wide-angle image based on the optical axis direction and the angle of view of a virtual camera, the angle of view of the wide-angle image, and the coordinate in the wide-angle image.

6. The image processing apparatus according to any one of claims 1 to 5, **characterized in that** the wide-angle image is one of an image that are obtained based on a projection method of a fisheye lens, an equidistant cylindrical image, and an omnidirectional image.

7. The image processing apparatus according to any one of claims 1 to 6, **characterized in that** the region information includes region information on a plurality of image regions related to a plurality of viewing angles.

8. The image processing apparatus according to any one of claims 1 to 7, **characterized in that** the image processing apparatus further comprises:
a coordinate value obtainment unit configured to obtain a coordinate value that designates a coordinate in the wide-angle image, in which
the first generation unit determines a position at which the region information is superimposed in the perspective projection image based on a coordinate value obtained by the coordinate value obtainment unit.

9. The image processing apparatus according to claim 8, **characterized in that** the coordinate value obtainment unit obtains a coordinate value at which a specific object in the wide-angle image is positioned.

10. The image processing apparatus according to any one of claims 1 to 9, **characterized in that** the first generation unit generates the perspective projection image so as to change at least one of brightness and contrast between an inside and an outside of the image region.

11. The image processing apparatus according to any one of claims 1 to 10, **characterized in that** the image processing apparatus further comprises:
a second generation unit configured to generate an image for an HMD by cutting out the image region based on the region information, in which
the output unit outputs the perspective projection image and the image for the HMD to different display devices, respectively.

12. An image processing method to generate a perspective projection image from a wide-angle image, **characterized in that** the image processing method comprises:
generating (S2020, S2040) the perspective projection image from the wide-angle image based on an optical axis direction and an angle of view of a virtual camera;
obtaining (S2030) information about a predetermined viewing angle of an HMD and
outputting (2050) the generated perspective projection image, in which
the perspective projection image includes region information indicating an image region corresponding to a visual field region calculated based on the predetermined viewing angle in the wide-angle image and the angle of view of the virtual camera.

13. A program comprising instructions which, when the program is executed by a computer, cause the computer to carry out the image processing method of claim 12.

14. A non-transitory computer readable storage medium storing a program according to claim 13.

## Patentansprüche

1. Bildverarbeitungsvorrichtung, die konfiguriert ist, ein perspektivisches Projektionsbild aus einem Weitwinkelbild zu erzeugen, **dadurch gekennzeichnet, dass** die Bildverarbeitungsvorrichtung umfasst:
eine erste Erzeugungseinheit (1405), die konfiguriert ist, basierend auf einer Richtung einer optischen Achse und einem Blickwinkel einer virtuellen Kamera das perspektivische Projektionsbild aus dem Weitwinkelbild zu erzeugen;
eine Bereichsinformationserfassungseinheit (1402), die konfiguriert ist, Informationen über einen vorbestimmten Blickwinkel eines HMD zu erfassen; und
eine Ausgabeeinheit, die konfiguriert ist, das erzeugte perspektivische Projektionsbild auszugeben, wobei
das perspektivische Projektionsbild Bereichsinformationen enthält, die einen Bildbereich angeben, der einem Sichtfeldbereich entspricht, der basierend auf dem vorbestimmten Blickwinkel in dem Weitwinkelbild und dem Blickwinkel der virtuellen Kamera berechnet wird.

2. Bildverarbeitungsvorrichtung nach Anspruch 1, **dadurch gekennzeichnet, dass** die Bereichsinformationen einen Rahmen enthalten, der den Bildbereich angibt.

3. Bildverarbeitungsvorrichtung nach Anspruch 1 oder 2, **dadurch gekennzeichnet, dass** die Bereichsinformationen eine Zeichenkette enthalten, die den Blickwinkel angibt.

4. Bildverarbeitungsvorrichtung nach einem der Ansprüche 1 bis 3, **dadurch gekennzeichnet, dass** der Blickwinkel ein Blickwinkel eines vorbestimmten HMD ist, und
die Bereichsinformationen eine Zeichenkette enthalten, die ein Modell des vorbestimmten HMD angibt.

5. Bildverarbeitungsvorrichtung nach einem der Ansprüche 1 bis 4, **dadurch gekennzeichnet, dass** die Bildverarbeitungsvorrichtung ferner umfasst:
eine Parametererfassungseinheit, die konfiguriert ist, einen Blickwinkel des Weitwinkelbilds und eine Koordinate in dem Weitwinkelbild entsprechend einer Kriteriumskoordinate in dem perspektivischen Projektionsbild zu erfassen, wobei
die erste Erzeugungseinheit das perspektivische Projektionsbild aus dem Weitwinkelbild basierend auf der Richtung der optischen Achse und dem Blickwinkel einer virtuellen Kamera, dem Blickwinkel des Weitwinkelbilds und der Koordinate im Weitwinkelbild erzeugt.

6. Bildverarbeitungsvorrichtung nach einem der Ansprüche 1 bis 5, **dadurch gekennzeichnet, dass** das Weitwinkelbild eines von einem basierend auf einem Projektionsverfahren einer Fischaugenlinse erfassten Bild, einem äquidistanten zylindrischen Bild und einem omnidirektionalen Bild ist.

7. Bildverarbeitungsvorrichtung nach einem der Ansprüche 1 bis 6, **dadurch gekennzeichnet, dass** die Bereichsinformationen Bereichsinformationen über mehrere Bildbereiche in Bezug auf mehrere Blickwinkel enthalten.

8. Bildverarbeitungsvorrichtung nach einem der Ansprüche 1 bis 7, **dadurch gekennzeichnet, dass** die Bildverarbeitungsvorrichtung ferner umfasst:
eine Koordinatenwerterfassungseinheit, die konfiguriert ist, einen Koordinatenwert zu erfassen, der eine Koordinate in dem Weitwinkelbild bezeichnet, wobei
die erste Erzeugungseinheit eine Position, an der die Bereichsinformationen in dem perspektivischen Projektionsbild überlagert sind, basierend auf einem durch die Koordinatenwerterfassungseinheit erfassten Koordinatenwert bestimmt.

9. Bildverarbeitungsvorrichtung nach Anspruch 8, **dadurch gekennzeichnet, dass** die Koordinatenwerterfassungseinheit einen Koordinatenwert erfasst, an dem ein spezifisches Objekt in dem Weitwinkelbild positioniert ist.

10. Bildverarbeitungsvorrichtung nach einem der Ansprüche 1 bis 9, **dadurch gekennzeichnet, dass** die erste Erzeugungseinheit das perspektivische Projektionsbild erzeugt, um mindestens eines von Helligkeit und Kontrast zwischen innerhalb und außerhalb des Bildbereichs zu ändern.

11. Bildverarbeitungsvorrichtung nach einem der Ansprüche 1 bis 10, **dadurch gekennzeichnet, dass** die Bildverarbeitungsvorrichtung ferner umfasst:
eine zweite Erzeugungseinheit, die konfiguriert ist, ein Bild für ein HMD durch Ausschneiden des Bildbereichs basierend auf den Bereichsinformationen zu erzeugen, wobei
die Ausgabeeinheit das perspektivische Projektionsbild und das Bild für das HMD jeweils an verschiedene Anzeigevorrichtungen ausgibt.

12. Bildverarbeitungsverfahren zum Erzeugen eines perspektivischen Projektionsbilds aus einem Weitwinkelbild, **dadurch gekennzeichnet, dass** das Bildverarbeitungsverfahren umfasst:
Erzeugen (S2020, S2040) des perspektivischen Projektionsbilds aus dem Weitwinkelbild basierend auf einer Richtung einer optischen Achse und einem Blickwinkel einer virtuellen Kamera;
Erfassen (S2030) von Informationen über einen vorbestimmten Blickwinkel eines HMD und
Ausgeben (2050) des erzeugten perspektivischen Projektionsbilds, wobei
das perspektivische Projektionsbild Bereichsinformationen enthält, die einen Bildbereich angeben, der einem Sichtfeldbereich entspricht, der basierend auf dem vorbestimmten Blickwinkel in dem Weitwinkelbild und dem Blickwinkel der virtuellen Kamera berechnet wird.

13. Programm, das Anweisungen umfasst, die, wenn das Programm von einem Computer ausgeführt wird, den Computer veranlassen, das Bildverarbeitungsverfahren nach Anspruch 12 auszuführen.

14. Nichtflüchtiges computerlesbares Speichermedium, das ein Programm nach Anspruch 13 speichert.

## Revendications

1. Appareil de traitement d'image configuré pour générer une image de projection en perspective à partir d'une image grand angle, **caractérisé en ce que** l'appareil de traitement d'image comprend :
une première unité de génération (1405) configurée pour générer l'image de projection en perspective à partir de l'image grand angle sur la base d'une direction d'axe optique et d'un angle de vue d'une caméra virtuelle ;
une unité d'obtention d'informations de région (1402) configurée pour obtenir des informations sur un angle de visualisation prédéterminé d'un HMD ; et
une unité de sortie configurée pour délivrer en sortie l'image de projection en perspective générée, dans lequel l'image de projection en perspective comporte des informations de région indiquant une région d'image correspondant à une région de champ visuel calculée sur la base de l'angle de visualisation prédéterminé dans l'image grand angle et de l'angle de vue de la caméra virtuelle.

2. Appareil de traitement d'image selon la revendication 1, **caractérisé en ce que** les informations de région comportent un cadre indiquant la région d'image.

3. Appareil de traitement d'image selon la revendication 1 ou 2, **caractérisé en ce que** les informations de région comportent une chaîne de caractères indiquant l'angle de visualisation.

4. Appareil de traitement d'image selon l'une quelconque des revendications 1 à 3, **caractérisé en ce que** l'angle de visualisation est un angle de visualisation d'un HMD prédéterminé, et
les informations de région comportent une chaîne de caractères indiquant un modèle du HMD prédéterminé.

5. Appareil de traitement d'image selon l'une quelconque des revendications 1 à 4, **caractérisé en ce que** l'appareil de traitement d'image comprend en outre :
une unité d'obtention de paramètres configurée pour obtenir un angle de vue de l'image grand angle et une coordonnée dans l'image grand angle correspondant à une coordonnée critère dans l'image de projection en perspective, dans lequel
la première unité de génération génère l'image de projection en perspective à partir de l'image grand angle sur la base de la direction d'axe optique et de l'angle de vue d'une caméra virtuelle, de l'angle de vue de l'image grand angle et des coordonnées dans l'image grand angle.

6. Appareil de traitement d'image selon l'une quelconque des revendications 1 à 5, **caractérisé en ce que** l'image grand angle est l'une d'une image qui est obtenue sur la base d'un procédé de projection d'un objectif hypergone, d'une image cylindrique équidistante et d'une image omnidirectionnelle.

7. Appareil de traitement d'image selon l'une quelconque des revendications 1 à 6, **caractérisé en ce que** les informations de région comportent des informations de région sur une pluralité de régions d'image liées à une pluralité d'angles de visualisation.

8. Appareil de traitement d'image selon l'une quelconque des revendications 1 à 7, **caractérisé en ce que** l'appareil de traitement d'image comprend en outre :
une unité d'obtention de valeur de coordonnée configurée pour obtenir une valeur de coordonnée qui désigne une coordonnée dans l'image grand angle, dans lequel
la première unité de génération détermine une position à laquelle les informations de région sont superposées dans l'image de projection en perspective sur la base d'une valeur de coordonnée obtenue par l'unité d'obtention de valeur de coordonnée.

9. Appareil de traitement d'image selon la revendication 8, **caractérisé en ce que** l'unité d'obtention de valeur de coordonnée obtient une valeur de coordonnée à laquelle un objet spécifique dans l'image grand angle est positionné.

10. Appareil de traitement d'image selon l'une quelconque des revendications 1 à 9, **caractérisé en ce que** la première unité de génération génère l'image de projection en perspective de manière à changer au moins l'un d'une luminosité et d'un contraste entre un intérieur et un extérieur de la région d'image.

11. Appareil de traitement d'image selon l'une quelconque des revendications 1 à 10, **caractérisé en ce que** l'appareil de traitement d'image comprend en outre :
une deuxième unité de génération configurée pour générer une image pour un HMD en découpant la région d'image sur la base des informations de région, dans lequel
l'unité de sortie délivre en sortie l'image de projection en perspective et l'image pour le HMD vers différents dispositifs d'affichage, respectivement.

12. Procédé de traitement d'image pour générer une image de projection en perspective à partir d'une image grand angle, **caractérisé en ce que** le procédé de traitement d'image comprend :
la génération (S2020, S2040) de l'image de projection en perspective à partir de l'image grand angle sur la base d'une direction d'axe optique et d'un angle de vue d'une caméra virtuelle ;
l'obtention (S2030) d'informations sur un angle de visualisation prédéterminé d'un HMD et
la sortie (2050) de l'image de projection en perspective générée, dans lequel
l'image de projection en perspective comporte des informations de région indiquant une région d'image correspondant à une région de champ visuel calculée sur la base de l'angle de visualisation prédéterminé dans l'image grand angle et de l'angle de vue de la caméra virtuelle.

13. Programme comprenant des instructions qui, lorsque le programme est exécuté par un ordinateur, amènent l'ordinateur à réaliser le procédé de traitement d'image selon la revendication 12.

14. Support de stockage non transitoire lisible par ordinateur stockant un programme selon la revendication 13.
